# EUROPEAN PATENT APPLICATION

(11) **EP 1 876 769 A2**
(43) Date of publication of application: **09.01.2008**
(21) Application number: 07104987.8
(22) Date of filing: 27.03.2007
(51) Int. Cl.: H04L 12/56

(54) **Bluetooth device capable of selecting profile and data transmission method**

(30) Priority: 04.07.2006 KR 20060062284
(71) Applicant: Samsung Electronics Co., Ltd., Suwon-si, Gyeonggi-Do (KR)
(72) Inventor: Gha, Hwang-hyeon, Yeongtong-dong, Yeongtong-gu, Suwon-si, Gyeonggi-do (KR)
(74) Representative: Walaski, Jan Filip

(57) **Abstract**

A Bluetooth device capable of selecting profile and method of transmission data thereof. The Bluetooth device uses information polled from neighboring Bluetooth devices to determine if the neighboring Bluetooth devices have a profile and/or mode of operation that is compatible with a user selected operation. If a device's profile is compatible with the user selected operation, a list of suitable devices and/or profiles is displayed to the user. The user can thereby select which profile to use and/or which device to use for performing the selected operation. Additionally, profiles that are presented to the user may be displayed in a hierarchal order, enabling the user to quickly select a "best" profile. Accordingly, unsuccessful execution of applications with non-compatible, or less than optimal Bluetooth devices can be avoided as well as unsuccessful execution of application with non-connected neighboring Bluetooth devices.

## Description

The invention relates to a Bluetooth device capable of selecting a profile and data transmission method. More particularly, the present invention relates to a Bluetooth device capable of selecting a profile, wherein an appropriate Bluetooth device and profile can be selected and provided according to a data type.

Bluetooth is a cable-replacement technology that allows various communication devices to communicate with each other using a short range wireless connection. If the Bluetooth technology is applied to a mobile phone with a computer, for example, these two devices can be connected to each other without requiring cables.

Almost every digital device such as printers, personal digital assistant (PDA), computers, facsimiles, keyboards and joysticks can be a part of such a Bluetooth system.

The Bluetooth technology not only frees the devices from complicated and inconvenient cables, but also provides an interface between an existing data network and peripheral devices, and between the substructure of the fixed network by forming a special group.

The Bluetooth profiles define how to use protocol stacks, and selective or essential conditions required for each application.

If Bluetooth communication is implemented with a specific data, a specific application is selected in this procedure. A number of different applications are used for implementing such an application.

The applications compatible with the Bluetooth profiles are according to a level type. For instance, an application for printing photos supports profiles of "BPP→BIP→HCRP→OPP". If two different devices support different types of applications, or one of the applications is mapped to a different profile from that of another application, both devices cannot be connected to each other.

For example, if device A supports a basic printing profile (BPP), and device B supports an object pushing profile (OPP), printing operation between these two devices cannot be achieved.

Recently, various kinds of profiles have been developed by the special interest group (SIG), and are used in a wide variety of applications and are being developed for use in many more. Since the users cannot choose the profiles in today's Bluetooth system, such developments may create much more confusion among the users.

The present general inventive concept provides a Bluetooth device capable of selecting a profile and method for transmission data thereof by which an appropriate Bluetooth device according to data types is selected, thereby a profile that is supported by the selected device can be provided.

Additional aspects and advantages of the present general inventive concept will be set forth in part in the description which follows and, in part, will be obvious from the description, or may be learned by practice of the general inventive concept.

According to an exemplary aspect of the present general inventive concept, a Bluetooth device capable of selecting profile is provided, which may include a discovery unit capable of searching one or more Bluetooth devices in a surrounding area to perform an operation for a selected data, a device information collecting unit capable of collecting device information received from the searched Bluetooth devices, an application management unit capable of selecting another Bluetooth device to operate on the data among the searched Bluetooth devices based on the collected device information, and a communication unit capable of transmitting data to the Bluetooth device by using one or more profiles, supported by the selected Bluetooth device, when the profile is selected by the application management unit.

If an application is implemented, the application management unit may enable an application to output a list of an data to be processed when the application is executed.

The application management unit may generate a list containing a second Bluetooth devices, and if a the second Bluetooth device is selected, a profile list supported by the second Bluetooth device is displayed.

The application management unit may output the profile according to a predetermined priority order.

The application management unit may also enable the application generates a list of Bluetooth devices, and if an appropriate Bluetooth device is selected, applies a highest priority profile among profiles supported by the selected Bluetooth device.

The application management unit may generate a list of profiles, and the communication unit uses the selected profile to transmit data to the selected Bluetooth device upon selection of an appropriate profile.

The application management unit may further include a user interface unit receiving a signal if a Bluetooth devices or profiles is selected as most appropriate.

According to an exemplary aspect of the present general inventive concept, a method for transmitting Bluetooth device data may include, searching a first Bluetooth device capable of being connected to at least one or more second Bluetooth devices to operate on a selected data, collecting device information received from the at least one or more second Bluetooth devices , displaying the at least one or more second Bluetooth devices and selecting a Bluetooth device that is most appropriate for a connecting procedure by using the collected device information, and transmitting data to the selected Bluetooth device by using a selected profile, wherein the selected profile is supportable by the selected Bluetooth device.

If an application is implemented, it may further include outputting a list of object data from the application, the application operating on the selected data.

In another exemplary embodiment of the present general inventive concept, the data transmitting operation may further include, outputting a list containing the at least one or more second Bluetooth devices, outputting a profile list supported by the at least one or more second Bluetooth devices, selecting a profile from the profile list; and transmitting the selected data to one of the at least one or more second Bluetooth devices by using the selected profile.

When outputting the profile list, the list may be output according to a predetermined priority order.

The data transmitting operation may also include, outputting a list containing the at least one or more second Bluetooth devices, applying a profile that has a highest priority among profiles supported by the at least one or more second Bluetooth devices, and transmitting the selected data to a Bluetooth device of the at least one or more second Bluetooth devices by using the applied profile.

The data transmitting operation may include, outputting a profile list supported by a Bluetooth device of the at least one or more second Bluetooth devices; and transmitting the selected data to the other Bluetooth device by using a selected profile from the profile list.

Yet another exemplary embodiment of the general inventive concept may be achieved by providing a Bluetooth master with a polling module, wherein the polling module polls neighboring Bluetooth devices to acquire information on the capabilities of the neighboring Bluetooth devices, a profile module, wherein the profile module filters information on the capabilities of the neighboring Bluetooth devices and generates corresponding profiles for the neighboring Bluetooth devices, a compatibility module, wherein the compatibility module determines which neighboring Bluetooth device is capable of performing a desired action, based on information filtered from the profile module, and a selection module, wherein the selection module provides a list to a user of the Bluetooth master device, of neighboring Bluetooth devices capable of performing the desired action.

In yet another exemplary embodiment of the general inventive concept, a computer-readable recording medium having embodied thereon a computer program to execute a method of transmitting Bluetooth device data is provided, the method searching a first Bluetooth device capable of being connected to at least one or more second Bluetooth devices to operate on a selected data, collecting device information received from the at least one or more second Bluetooth devices, displaying the at least one or more second Bluetooth devices and selecting a Bluetooth device that is most appropriate for a connecting procedure by using the collected device information, and transmitting data to the selected Bluetooth device by using a selected profile, wherein the selected profile is supportable by the selected Bluetooth device.

These and/or other aspects and advantages of the present invention will become apparent and more readily appreciated from the following description of an embodiment thereof given by way of illustrative example, when taken in conjunction with the accompanying drawings of which:
Figure 1 is a block diagram of a Bluetooth device capable of selecting a profile,
Figure 2 illustrates an example of selecting profile from the Bluetooth device illustrated in Figure 1, and
Figure 3 is a flowchart illustrating an example of a method of a selecting profile in accordance with the invention.

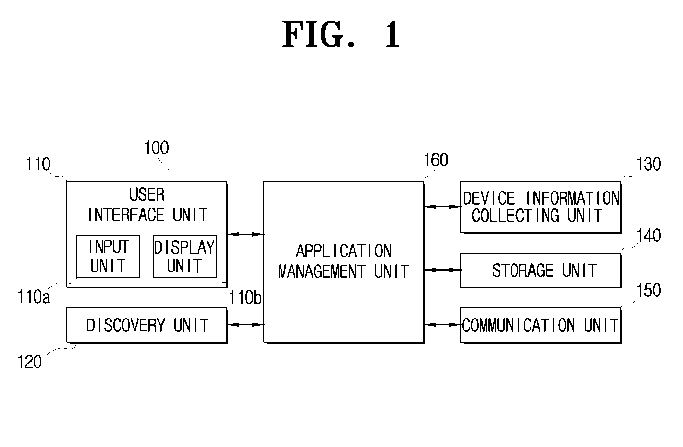

Referring to Figure 1, a Bluetooth device 100 includes a user interface unit 110, a discovery unit 120, a device information collecting unit 130, a storage unit 140, a communication unit 150, and an application management unit 160. Throughout the description, the Bluetooth device 100 is a device through which another Bluetooth device (not shown) will be connected.

The user interface unit 110 supports communication between the Bluetooth device 100 and a user. While Figure 1 illustrates the user interface unit 110 separately including an input 110a and a display 110b, it should be understood that the input 110a and display 110b may be implemented as a single system, for example, as a touch screen system, in which the input and display operate in a single unit.

The input unit 100a receives a selection signal from the user indicating a selection from a profile list or a list of other Bluetooth devices, and a selection signal selecting data to be processed, and transmits the selection signals to the application management unit 160.

The display unit 110b, preferably but not necessarily, operates under the control of the application unit 160. The display unit 110b displays information including a data list accessible by an application, a list of other Bluetooth devices selected as appropriate for the intended operation, and a list of profiles supported by the other Bluetooth devices. The list of profiles supported by the other Bluetooth device(s) can be displayed under the control of the application management unit 160, according to a predetermined order, as desired.

The discovery unit 120 searches for the other Bluetooth devices, which can be connected with the Bluetooth device 100 to perform a given operation. The discovery unit 120 may preferably search for the Bluetooth devices using a known standard such as Universal Plug and Play (UPnP), for example, or any other suitable future devised standard or protocol.

The procedure for the selected data can be determined according to the type of the application selected by the user. For example, a user may invoke a printing application when 'printing' is set for the data.

The device information collecting unit 130 collects device information from the Bluetooth devices found by the discovery unit 120. Table 1 below shows one possible example of the device information collected by the device information collecting unit 130.

**[Table 1]**

| Device name | A | B | C | D | E |
|---|---|---|---|---|---|
| Type | printer | printer | mobile phone | mobile phone | printer |

The device information collecting unit 130 scans all the Bluetooth devices in the surrounding area resulting in the list of devices, for example, as shown in Table 1, and selectively collects device information from the devices under the control of the application management unit 160.

Another possibility for device information, for Bluetooth devices, collected by the device information collecting unit 130, is shown, for example, in Table 2 below. Table 2 shows an example of selected Bluetooth devices and their information, when a 'printing' operation is set for the data. Table 2 lists device information regarding the devices corresponding to the 'printing' operation, among the Bluetooth devices of Table 1. The device information may include the name, operation types and profiles of the device, as according to design preference.

**[Table 2]**

| Device Name | A | B | E |
|---|---|---|---|
| Category | printer | Printer | printer |
| Profile | BPP/BIP/OPP | OPP/BIP | HCRP |

As shown in Table 2, the Bluetooth profiles include: Basic Printer Profile (BPP), Basic Image Profile (BIP), Dial-up Networking profile (DUN), Object Push Profile (OPP), Hard Cable Replacement Profile (HCRP), File Transfer Profile (FTP), Generic Access Profile (GAP), LAN Access Profile (LAP), Object Exchange Profile (OBEX), Personal Area Network Profile (PAN), Serial Port Profile (SPP), ActiveSync (uses SPP to connect to ActiveSync on computer), and Audio Gateway Profile (AGP), and so on.

The profiles are prioritized according to the type of application in use. For example, the application for printing photos can have a priority order, such as "BPP→BIP→OPP→HCRP". Generally, but not necessarily, BPP takes the top priority in an application for printing, since BPP is a profile for printing.

The storage unit 140 may include a database (not shown) for storing data for communication with the other Bluetooth devices in the current application, a device information database (not shown) for storing the device information collected from the device information collecting unit 130, or the results of searching the other Bluetooth devices from the discovery unit 120, and a profile database (not shown) to store information regarding the profiles possible for data transference.

The communication unit 150 can transmit data to the other Bluetooth devices selected from the discovery unit 120 by using the selected profile. The selected profile may come from a list of profiles that may be displayed on the display unit 110b of the user interface unit 110.

The application management unit 160 manages the application executed by the user, and controls the input and output of signals among the user interface unit 110, the discovery unit 120, the device information collecting unit 130, the storage unit 140, and the communication unit 150.

The application management unit 160 reads out the data from the database of the storage unit, and displays the accessible data for the application, that is, displays a list of data for processing. The user can select data for a desired operation, such as printing, and can transmit the selected data to the corresponding Bluetooth device for processing of the data by transmitting the list of data displayed on the display unit 110b.

From the list of data for processing, the application management unit 160 selects an appropriate Bluetooth device corresponding to the selected data among the other Bluetooth devices searched by the discovery unit 120, using the device information collected by the device information collecting unit 130. One or more Bluetooth devices may be selected by the discovery unit 120.

The application management unit 160 selects an appropriate Bluetooth device corresponding to the selected data, extracts a profile supported by the selected Bluetooth device from the storage unit 140, and displays the extracted profile list on the display unit 110b. The user can thereby select any one of the other Bluetooth devices to transmit data, and the profile supported by the other Bluetooth device(s).

The application management unit 160 may display the list of selected Bluetooth devices on the display unit 110b, and if the user selects a particular Bluetooth device, the list of profiles supported by the selected Bluetooth device can be displayed on the display unit 110b, so that the user can select a profile that is the most appropriate.

If the application management unit 160 displays a list of Bluetooth devices, for example, as shown in Table 2, the result, as shown in Table 3, can be obtained by selecting an appropriate Bluetooth device for the selected application, for example.

**[Table 3]**

| Device Name | A | B |
|---|---|---|
| Type | Printer | Printer |
| Profile | BPP/BIP/OPP | OPP/BIP |

As shown in Table 3, when the appropriate Bluetooth device is/are selected, the application management unit 160 displays the selected Bluetooth device(s) on the display unit 110b for the user to select. It is possible that, based on design preferences, only the name of the devices (e.g. A and B) or the profiles supported by the device as well as the device names (e.g. A[BPP, BIP, OPP], B[BIP, OPP]) are displayed.

If the user selects one of the listed Bluetooth devices, the application management unit 160 displays a list of profiles supported by the selected Bluetooth device on the display unit 110b. Tables 4 and 5 below show an example of such a case.

**[Table 4]**

| Device Name | A |
|---|---|
| Type | Printer |
| Profile | BPP/BIP/OPP |

**[Table 5]**

| |
|---|
| BPP |
| BIP |
| OPP |

As shown in Tables 4 and 5, if the profile list supported by the predetermined Bluetooth device selected by the user is displayed, the user can select a profile from the list. The profiles may be displayed in order of priority, so that the user can easily select a high priority profile.

Alternatively, when a list of the selected Bluetooth devices is displayed on the display unit 110b, the user may select a Bluetooth device from the list, and the top priority profile supported by the predetermined Bluetooth devices can be automatically selected, when the user does not select any profile.

Alternatively, the application management unit 160 may allow the selected Bluetooth device and the list of profiles supported by the other Bluetooth device to be output through the display unit 110b, and if a profile is selected from the list, transmit the data to the Bluetooth device corresponding to the selected profile via the communication unit 150.

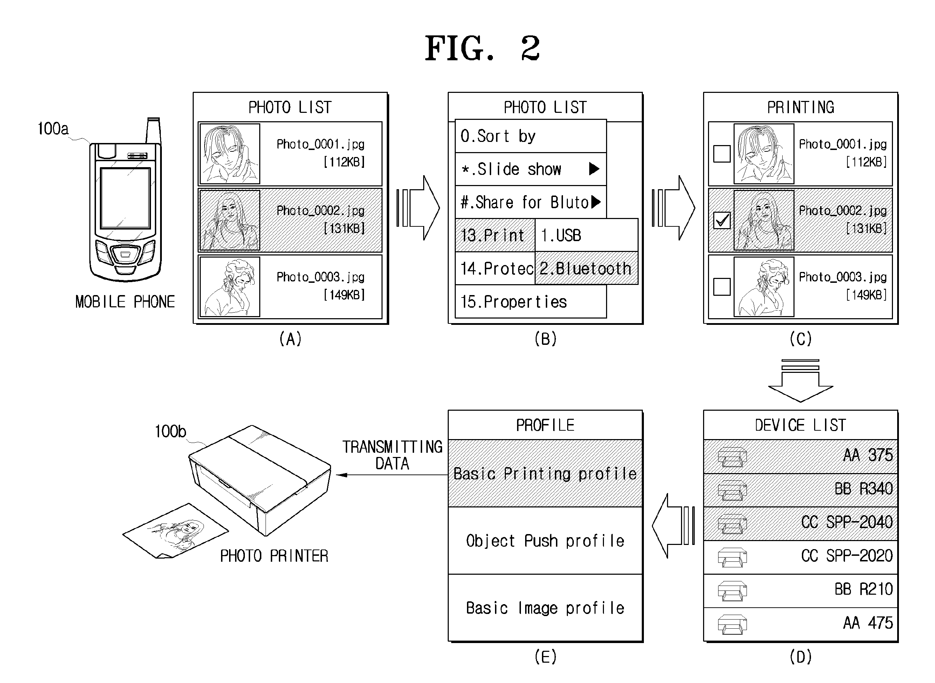

Figure 2 illustrates the exemplary operation of the Bluetooth device as illustrated in Figure 1 for selecting a profile.

The user executes an application corresponding to a desired result using the Bluetooth device 100. In explaining an exemplary embodiment of the present general inventive concept, a mobile phone 100a, for example, having the capabilities of the Bluetooth device 100 will be used. A process of selecting profiles from the Bluetooth device 100/mobile phone 100a is described below.

The user executes a desired application using the mobile phone 100a. Among the various applications, the printing application will be explained by way of example.

When the desired application is executed, the application management unit 160 extracts data for processing from the database of the storage unit 140, and displays a list of the extracted data on the display unit 110b. In various exemplary embodiments, a 'photo list' may be displayed as shown, for example, in (A).

The user can set various options from the photo list as shown in (B), and select Bluetooth communication from the options.

After passing though the operation shown in Figure 2, particularly Figure 2(A) and Figure 2B, a print screen confirming the selected data from the previous steps may be displayed as shown in Figure 2B.

The application management unit 160 selects an appropriate Bluetooth device for the printing operation, and displays the list of the selected Bluetooth devices on the display unit 110b, for example, as a device list shown in Figure 2D. The list of selected Bluetooth devices activates available devices, and de-activates unavailable devices, thereby improving the convenience of the user.

As shown in Figure 2D, if one Bluetooth device is selected by the user, the application management unit 160 displays the list of profiles supported by the other Bluetooth devices extracted from the profile database of the storage unit 140, via the display unit 110b as shown, for example, in Figure 2E.

As shown in Figure 2E, if a profile is selected by the user, the communication unit 150 transmits the data to the other Bluetooth device, for example, the photo printer 100b, by using the selected profile, whereby the photo printer 100b then prints the received data. While the example described in relation to Figure 2 is illustrated with the particular sequence of Figure 2A - Figure 2E, it should be apparent the sequence may be altered or re-ordered according to design preference. For example, the procedure described in Figure 2C may be omitted. Moreover, similar operations such as, for example, the "pull-down" menu shown in Figure 2B may be implemented in the other sequence operations.

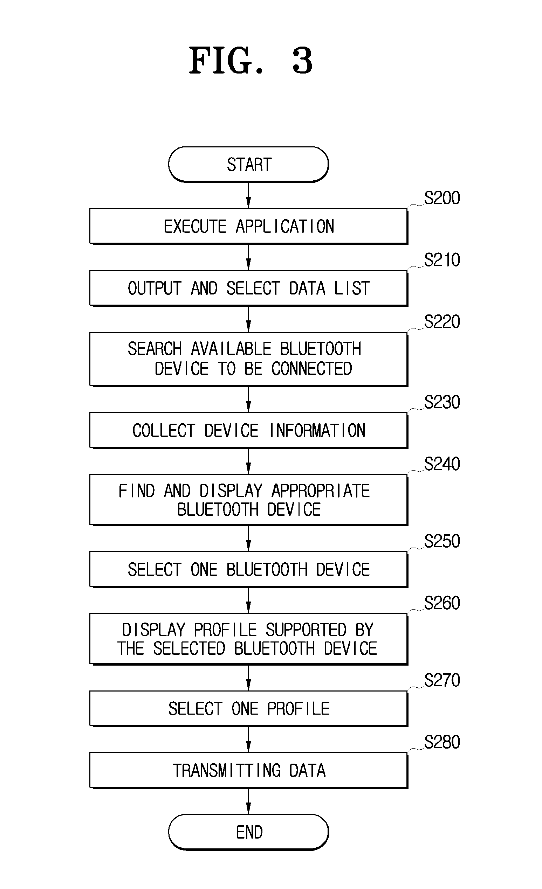

Hereinafter, a method of selecting profiles according to an exemplary embodiment of the invention is described with reference to Figures 1 through 3.

The user executes an application that utilises the Bluetooth device 100. For instance, the user executes an application for the printing operation when the user wants to print data via another Bluetooth device (operation S200).

The application management unit 160 extracts data for processing from a database from the storage unit 140, and displays the extracted data list via the display unit 110b. The user can select data for processing from the displayed data list (operation S210).

When the type of operation and the data to perform such an operation are selected by the user, the discovery unit 120 searches for available Bluetooth devices in the surrounding area (operation S220).

The device information collecting unit 130 collects device information from the Bluetooth devices discovered by the discovery unit 120. The user can be provided with information on the device names, for example, types of operation executed by the devices, and applicable profiles, from the device information collected by the device information collecting unit 130.

The application management unit 160 selects an appropriate Bluetooth device from the searched Bluetooth devices by using the device information collected by the device information collecting unit 130. One or more Bluetooth devices may be selected by the discovery unit 120. The application management unit 160 displays the list of selected Bluetooth devices on the display unit 110b (operation S240).

When the list of selected Bluetooth devices is displayed via the display unit 110b, the user selects one Bluetooth device to perform the operation via the input unit 110a (operation S250).

The application management unit 160 extracts profiles, supported by one of the selected Bluetooth devices, from the profile database, and displays the extracted profile list via the display unit 110b (operation S260).

When the profile list is displayed on the display unit 110b, the user selects one profile via the input unit 110a. The application management unit 160 may automatically select the top priority profile when the user does not select any profile (operation S270).

When a Bluetooth device to receive the data and the profile are selected, the communication unit 150 transmits the data to the determined Bluetooth device by using the determined profile (operation S280).

The Bluetooth device, when receiving data by the above described process, performs the operation corresponding to the received data. Because the profile used in the data transmission between the transmitting and receiving Bluetooth devices is supported by the receiving Bluetooth devices, a connection error between the Bluetooth devices can be minimized.

As described above, with the Bluetooth device capable of selecting a profile and method for transmission data thereof, an appropriate Bluetooth device can be selected according to the type of the given data for processing, and the profiles supported by the selected Bluetooth device can be provided. As a result, connection errors caused by an inconformity of profiles can be prevented, and connection availability between the plurality of Bluetooth devices can be enhanced.

In addition, because the list of appropriate Bluetooth devices for the given operation may be displayed by using the results from the discovery procedure, the searching for an appropriate Bluetooth device can be minimized.

It will be appreciated by those skilled in the art that changes may be made in described example without departing from the invention, the scope of which is defined in the following claims.

## Claims

1. A Bluetooth device capable of selecting a profile, comprising:
a discovery unit (120) capable of searching for one or more Bluetooth devices in a surrounding area to perform an operation upon selected data;
a device information collecting unit (130) capable of collecting device information from the searched Bluetooth devices; and
an application management unit (160) capable of selecting a Bluetooth device able to operate on the selected data, from among the searched Bluetooth devices based on the collected device information; and
a communication unit (150) capable of transmitting data to the selected Bluetooth device by using one or more profiles supported by the selected Bluetooth device, when the profile is selected by the application management unit.

2. The Bluetooth device of claim 1, wherein the application management unit is configured to output a list of data to be processed in an application performing the operation.

3. The Bluetooth device of claim 1 or 2, wherein the application management unit generates a list containing a second Bluetooth device, and when the second Bluetooth device is selected, a profile list supported by the second Bluetooth device is generated.

4. The Bluetooth device of claim 3, wherein the application management unit outputs the profile list according to a predetermined priority order.

5. The Bluetooth device of any preceding claim, wherein the application management unit is operable to generate a list of Bluetooth devices, and if an appropriate Bluetooth device is selected, to apply a highest priority profile among profiles supported by the selected Bluetooth device.

6. The Bluetooth device of any preceding claim, wherein the application management unit is operable to generate a list of profiles, and the communication unit uses the selected profile to transmit data to the selected Bluetooth device upon selection of an appropriate profile.

7. The Bluetooth device of claim 1, further comprising a user interface unit (110) operable to receive a signal when a Bluetooth device or a profile is selected as most appropriate.

8. A method of transmitting Bluetooth device data comprising:
searching with a first Bluetooth device for at least one or more second Bluetooth devices capable of being connected thereto to operate on selected data;
collecting device information received from the at least one or more second Bluetooth devices;
displaying the at least one or more second Bluetooth devices and selecting a Bluetooth device that is most appropriate for a connecting procedure by using the collected device information; and
transmitting data to the selected Bluetooth device by using a selected profile, wherein the selected profile is supportable by the selected Bluetooth device.

9. The method of claim 8, further comprising:
outputting a list of object data from an application, the application operating on the selected data.

10. The method of claim 8 or 9, further comprising:
outputting a list containing the at least one or more second Bluetooth devices;
outputting a profile list supported by the at least one or more second Bluetooth devices;
selecting a profile from the profile list; and
transmitting the selected data to one of the at least one or more second Bluetooth devices by using the selected profile.

11. The method of claim 10, wherein the profile list is output according to a predetermined priority order.

12. The method of claim 8, wherein further comprising:
outputting a list containing the at least one or more second Bluetooth devices;
applying a profile that has a highest priority among profiles supported by the at least one or more second Bluetooth devices; and
transmitting the selected data to a Bluetooth device of the at least one or more second Bluetooth devices by using the applied profile.

13. The method of claim 8, wherein the transmitting further comprises:
outputting a profile list supported by a Bluetooth device of the at least one or more second Bluetooth devices; and
transmitting the selected data to the Bluetooth device by using a selected profile from the profile list.

14. A Bluetooth master device, comprising:
a polling module to poll neighboring Bluetooth devices to acquire information on the capabilities of the neighboring Bluetooth devices;
a profile module to filter information on the capabilities of the neighboring Bluetooth devices and generates corresponding profiles for the neighboring Bluetooth devices;
a compatibility module to determine which neighboring Bluetooth device is capable of performing a desired action, based on information filtered from the profile module; and
a selection module to provide a list to a user of the Bluetooth master device, of neighboring Bluetooth devices capable of performing the desired action.

15. The Bluetooth master device of claim 14, further comprising:
an application module to control an operation of the polling module, profile module, compatibility module, and selection module.

16. The Bluetooth master device of claim 14, wherein the selection module's list is of compatible profiles.

17. The Bluetooth master device of claim 14, wherein the selection module automatically selects a profile.

18. The Bluetooth master device of claim 14, wherein the selection module provides a list of compatible Bluetooth devices based on a user-selected profile.

19. A computer-readable recording medium having embodied thereon a computer program to execute a method of transmitting Bluetooth device data as claimed in any one of claims 8 to 13.
